(19) Europäisches Patentamt
European Patent Office
Office européen des brevets

(11) EP 4 349 661 B1

(12) EUROPEAN PATENT SPECIFICATION

(45) Date of publication and mention of the grant of the patent:
**28.01.2026 Bulletin 2026/05**

(21) Application number: **22200026.7**

(22) Date of filing: **06.10.2022**

(51) International Patent Classification (IPC):
***B60R 21/013*** *(2006.01)*

(52) Cooperative Patent Classification (CPC):
**B60R 21/013;** B60R 21/01

# (54) METHOD FOR RESTRAINT DEPLOYMENT ADAPTION AND SYSTEM FOR RESTRAINT DEPLOYMENT ADAPTION

VERFAHREN ZUR RÜCKHALTEEINSATZANPASSUNG UND SYSTEM ZUR RÜCKHALTEEINSATZANPASSUNG

PROCÉDÉ D'ADAPTATION DE DÉPLOIEMENT DE RETENUE ET SYSTÈME D'ADAPTATION DE DÉPLOIEMENT DE RETENUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**10.04.2024 Bulletin 2024/15**

(73) Proprietor: **Veoneer Sweden Safety Systems AB**
**10302 Stockholm (SE)**

(72) Inventors:
- **VERMEULIN, Francois-Xavier**
  **95800 Cergy-Pontoise (FR)**
- **ROCCHISANI, Claire**
  **95800 Cergy-Pontoise (FR)**
- **DEVAVRY, Arnaud**
  **95800 Cergy-Pontoise (FR)**
- **LEMERRER, Yann**
  **95800 Cergy-Pontoise (FR)**
- **BEN SAID, Hela**
  **95800 Cergy-Pontoise (FR)**
- **LOISY, Aurore**
  **95800 Cergy-Pontoise (FR)**

(74) Representative: **Reichert & Lindner Partnerschaft Patentanwälte**
**Prüfeninger Straße 21**
**93049 Regensburg (DE)**

(56) References cited:
**US-A1- 2005 017 488** **US-B2- 9 919 670**

- **IZTOK CIGLARI&CCARON; ET AL: "PRISM WP1: Task 1.1: State of the Art and Patent Search Report", REPORT WP1 TASK 1.1, EUROPEAN PRISM PROJECT, 1 February 2005 (2005-02-01), pages 1 - 54, XP055340581, Retrieved from the Internet <URL:http://www.prismproject.com/SOTA_Final.pdf> [retrieved on 20170131]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 349 661 B1

## Description

### FIELD OF THE INVENTION

The invention relates to a method for restraint deployment adaption in a vehicle.
The invention further relates to a system for restraint deployment adaption in a vehicle.

### DESCRIPTION OF THE BACKGROUND ART

US 2004/0153229 A1 relates to sensor system for determining a deployment level of an airbag in a vehicle. A light source of the sensor system emits light onto a region around a vehicle seat. An array of light-sensitive pixels which capture reflected light from the scene, including reflected light that originated from the light source. Processing resources are provided that determine depth information for an object in the scene based on a time-of-flight characteristic of the reflected light from the light source captured on the array. The processing resources may be configured to determine occupancy data for the object based on the captured reflected light from the scene. The processing resources are configured to determine the deployment level of the airbag based at least in part on the occupancy data in when a collision of the vehicle occurs.
US 2005/0017488 A1 relates to a weight measuring system and methods for vehicles. The system for controlling a vehicle component is based on occupancy of a seat. An adjustment system is a system for adjusting deployment of an occupant restraint device. A bladder is used to measure the weight of the occupant. The position of the occupant is sensed to adjust the occupant restraint device. All the sensed data are provided to a neural network in order to obtain a trained pattern recognition system. Different objects are tested to obtain the unique patterns from each object. The disclosed time-of-flight 3D camera is used to measure distances, which is related to positions and not to the size of the occupant.
As known, the different crash regulations tend to consider more and more additional type of occupant morphologies in addition to the $50^{th}$ Male usually used as a standard dummy to estimate the injuries.
Current crash algorithms are limited by the technology of the sensors used to estimate the occupant size and position.
Seat track and/or seat weight sensors are used to perform an indirect estimation of the occupant classification (position and size) but the actual occupant classification (position and size as a function of time) is unknown.
This estimation is moreover limited by the seat track sensor which usually provides only two states (forward, rearward). Then, current crash algorithms usually manage only small vs large occupant classification.
About the driver, the correlation between seat track and occupant classification can be accurate thanks to the constraints of the driver position (arm and legs lengths: a small occupant must be able to touch the steering wheel to drive). There is however a bad correlation between seat track and occupant classification about the passenger. It has to be noticed that the correlation between seat track and driver classification will tend to be less and less accurate, as drivers will be able to switch into a relax position when the vehicle will be in autonomous mode.
Examples for mis-classification are:

One example of driver mis-classification would be a large occupant ($50^{th}$ male for example) who would put his seat in a forward position due to a long plank of wood stored behind the driver seat. The occupant is in this case a $50^{th}$ male whereas the seat track sensor has classified him as a small occupant.
One example of passenger mis-classification would be a $5^{th}$ occupant who would be in a very rearward position with his backrest in a lean position. A dedicated deployment logic could be set in place for such passenger size in this position whereas the seat track sensor has classified him as a large occupant.
Another example of passenger mis-classification would be a seat weight sensor tricked by an additional weight on the knees of the occupant (luggage for example).
A typical example of mis-classification of an indirect sensors system like seat track, seat weight or back rest sensors occur in braking situations where the occupant position does not correlate with the frozen seat sensors information.

Current algorithms are doing an indirect estimation of the occupant size and occupant position based on the seat track and/or seat weight sensors to create an occupant classification (small or large). The restraint deployment strategies are computed and optimized for certain type of occupants in specific positions.

### SUMMARY OF THE INVENTION

It is an object of the present invention to provide a method for a restraint deployment strategy which is able to adapt the deployment strategy on the basis of the actual measured direct and indirect occupant classification.
The above object is achieved by a method for a restraint deployment according to the features of claim 1.

It is a further object of the present invention to provide a system for a restraint deployment strategy which is able to adapt the deployment strategy on the basis of the actual measured occupant classification.

The above object is achieved by a system for a restraint deployment according to the features of claim 7.

The inventive method for restraint deployment adaption in a vehicle is defined by the determination of position data of at least one seat of the vehicle with a seat sensor system. Additionally, a size of an occupant and position of the occupant in the seat is measured with at least one 3D sensor system. A fusion is carried out, including at least the position data of the seat and the measured position and size of an occupant in the seat of the vehicle. The fusion module generates a fused occupant classification. The fused occupant classification is transferred to an occupant displacement prediction module and to a deployment requests module. An event (crash, high deceleration or high acceleration) is detected by an event detection module. Finally, in the deployment requests module an adjustment of the restraint system strategy is calculated in function of the actual classification of the occupant.

The advantage of the present invention is that the restraint deployment strategy is adaptable to the position and morphology of an occupant in the seat of a vehicle, which limits the damages on the occupant during a crash. The invention allows an adjustment of the deployment logic in the ECU as much as possible to the actual occupant size and its position on the seat.

According to an embodiment of the invention, the weight of the occupant in the respective seat is defined by the seat sensor system. The occupant weight is an additional body metric of the occupant, which is used in a signal processing module to provide data and/or information for the crash algorithm.

According to a further embodiment of the invention the position of the occupant is defined in addition by the distance of a chest of the occupant from a steering wheel or a dashboard of the vehicle. The distance of the chest to the steering wheel or the dashboard is measured as well by the at least one 3D sensor system. The measured distance is transferred from a signal processing module to the fusion module for carrying out fusion with the position data of the seat, the weight of the occupant and the size of the occupant and thereby generating a fused occupant classification The distance of the chest of the occupant from the steering wheel or the dashboard of the vehicle is determined by a computed 3D chest point within the area of the chest of the occupant.

The advantage of the information about the actual distance of the chest to the steering wheel or the dashboard and its more accurate measurement allows a better timing management of the airbags deployment and belts deployment strategies in the vehicle in case of a crash.

According to a further embodiment of the invention, the position of the occupant is as well defined by the distance or position of a head of the occupant from the steering wheel or the dashboard of the vehicle. The distance of the head is measured by the at least one 3D sensor system The measured distance is transferred to occupant displacement prediction module for calculating in the displacement prediction module with the use of the fused occupant classification an adaption with regard to deployment times of safety devises. The distance of the head of the occupant from the steering wheel or the dashboard of the vehicle is determined by a computed 3D head point within the area of the head.

The advantage of this embodiment is an optimization of the requested restraint protections according to the occupant's motion. This ensures a better coupling between the airbag and the occupant.

The at least one 3D sensor system includes at least one 3D imaging sensor. The at least one 3D sensor system may encompass an optical 3D sensor. An optical 3D sensor is any kind of sensor using optical radiation, e.g., visible or infrared light, to obtain three-dimensional data, in this context three-dimensional data which can be analysed to determine position and movement of occupants of the cabin of the vehicle. An example of an optical 3D sensor is one or more time-of-flight sensors which measure a distance to an object by emitting a light signal and measuring the time passing between emission of this signal and detection of light of this signal scattered from the object. Another example of an optical 3D sensor is a projected-light sensor, which operates by projecting a light pattern onto an object, recording the projected light pattern on the object with a camera, and determining the distance to the object by triangulation. A laser may be used as a light source for an optical 3D sensor, without the invention being restricted thereto. A further example of an optical 3D sensor is a 3D imaging sensor, which is a sensor providing three-dimensional image data which can be analysed to determine position and movement of occupants of the cabin of the vehicle; to this end, a 3D imaging sensor may include one or more cameras.

A non-transitory computer-readable medium stores program instructions, which are executable on an electronic control unit of a vehicle for performing the computer-implemented method according to the present invention.

A system for a restraint deployment strategy comprises an electronic control unit in a vehicle. A signal processing module, a fusion module, an event detection module, an occupant displacement prediction module and a deployment requests module are installed in the electronic control system. At least one impact sensor (optionally one or several remote impact sensors of the vehicle) is connected to the event detection module. A seat sensor system of the signal processing module, comprising for example: at least one seat track sensor, at least one back rest sensor and at least one weight sensor. At least one 3D sensor system of the signal processing module is capable of determining the size of the occupant and is connected to the fusion module.

The advantage of the inventive system is a more accurate measurement and determination of the actual occupant size which will allow a better adjustment of the restraint deployment strategy and will also allow to optimize deployment strategies for more occupant sizes. The restraint deployment strategy gathers all kind of protections deployed in crash, for example airbag stage1, airbag stage2, venting, load limiter or the like),

The at least one 3D sensor system of the signal processing module, is capable to measure a distance of the chest of the occupant to a dashboard or steering wheel of the vehicle. The measured distance is connected or delivered from the signal processing module to the fusion module.

According to a further embodiment of the invention the at least one 3D sensor system of the signal processing module is capable of measuring or determining an actual position of the head of the occupant. The actual position is connected to the occupant displacement prediction module.

The advantage of the inventive system is a better determination of the deployment and a better timing of the safety devices of the vehicle within the restraint deployment strategy.

According to the inventive system, a fused occupant classification of the fusion module is connected to the displacement prediction module, which is capable of carrying out, based on the fused occupant classification, an adaption of deployment times of safety devises. The deployment requests module, which is capable of carrying out, based on the fused occupant classification and the result from displacement prediction module, an adjustment of the restraint system strategy in function of the actual classification of the occupant.

The safety devices are airbags, adaptive airbags, seat belts, seat belt pretension or the like. The 3D senor system includes at least one 3D imaging sensor. The 3D sensor system can be configured as well as an interior time of flight camera, a 3D-camera system or an interior radar system or any combination of the latter.

## BRIEF DESCRIPTION OF THE DRAWINGS

The numerous advantages of the disclosure may be better understood by those skilled in the art by reference to the accompanying figures in which:

**Figure 1** is a schematic view illustrating a vehicle including an ECU for controlling various protection devices.

**Figure 2** is a schematic representation of a 3D sensor system for determining the actual position of an occupant in a vehicle.

**Figure 3A to 3C** are different schematic views, showing the correlation between the chest distance from the steering wheel or the dash board and the seat track.

**Figure 4** is a schematic view of the crash algorithm which uses occupant size.

**Figure 5** is a schematic view of the crash algorithm which uses occupant size and occupant chest distance from the steering wheel and/or dashboard.

**Figure 6** is a schematic view of fusion between occupant sensors and direct sensing information.

**Figure 7** is a schematic view of the crash algorithm which uses occupant size occupant chest distance and occupant head distance to the steering wheel and/or dashboard.

**Figure 8** is a schematic representation, that a set of 3D point locations on the occupant body allow the computation of 3D body points.

**Figure 9** is a schematic representation of a mass model for the displacement of the occupant during a crash.

## DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

**Figure 1** is a schematic view illustrating a vehicle 1 including an electronic control unit 10 (ECU) for controlling various protection devices $2_1$, $2_2$,... $2_N$ for occupants (not shown) in the vehicle 1. Hereinafter, the "left" and "right" of the vehicle 1 mean the "left" and "right" of the center line L at the center in the width direction of the vehicle 1.

Preferably, the ECU 10 is placed centrally in the vehicle 1, so that a damage of the ECU 10 during a potential crash is avoided. The ECU 10 is communicatively connected to at least one central impact sensor 4C which senses an impact and at least one remote impact sensor 4R. Additionally, the at least one central impact sensor 4C and the at least one remote impact sensor 4R are preferably distributed such that it is possible to sense the location of the impact. The at least one central impact sensor 4C and the at least one remote impact sensor 4R are preferably high G sensors (acceleration sensors). In the embodiment shown here, the ECU 10 is electrically connected to a left side protection device $2_1$, a front left protection device $2_2$, a front right protection device $2_3$ and a right side protection device $2_4$. Although an illustration thereof has been omitted, further protection devices $2_i$, 5 <= i <= N can be provided for rear seats (not shown) as well.

The front left protection device $2_2$ and the front right protection device $2_3$ can be airbags (for example, face airbags and other airbags), seat belts, seat belt pretensioners, etc., which are deployed during a front face collision FFC to protect an occupant in the driver seat and passenger seat. The left side protection device $2_1$ and right side protection device $2_4$ can be airbags, seat belts, seat belt pretensioners, etc., which are deployed during an offset collision (not shown), a diagonal collision DC, and a side face collision SFC to protect the occupant in the driver seat and passenger seat. The ECU 10 controls the activity of the various protection devices $2_1$, $2_2$,..., $2_N$. It is evident for a person skilled in the art, that protection devices $2_1$, $2_2$, ...$2_N$ are as well used for the protection of the occupants in a vehicle 1 during a rear face collision RFC.

**Figure 2** shows a schematic representation of a 3D sensor system 21 for determining the actual position of an occupant 3 in a vehicle 1. The schematic representation shown here describes the situation that the position of the occupant 3, which is the driver of the vehicle 1, is determined by at least one sensor 3D sensor system 21. It is evident for a person skilled in the art, that the present invention is not limited to determine the position of the driver of the vehicle 1 only. The present invention allows the position determination of all occupants 3 in a vehicle, and the data of information gathered therefrom is used in the method for a restraint deployment strategy.

As mentioned above the actual position or size of the occupant 3 (for example driver) can be determined with at least one 3D sensor system 21. The at least one sensor 3D sensor system 21 determines the actual position of the occupant 3 (or occupants) through direct sensing. The 3D sensor system 21 can measure depth (or distance, or range) to an object based on illuminating the object with a laser (or other kinds of light source) and measuring the backscattered light. According to one possible embodiment the 3D sensor system 21 is defined as projected-light sensors which combine the projection of a light pattern with a standard 2D camera and depth is measured measure via triangulation. According to a further embodiment of the invention the 3D sensor system 21 comprises time-of-flight sensors that measure depth by estimating the time delay from light emission to light detection.

The direct sensing of the actual position of the occupant 3 by the 3D sensor system 21 can be based on the usage of interior time of flight camera, a 3D-imaging sensor or an interior radar system.

A seat sensor system 20 for at least one seat 7 of the vehicle 1 comprises several sensors, which are at least one seat track sensor 12, at least one back rest sensor 13 and at least one weight sensor 14. The at least one seat track sensor 12 is assigned to the seating 9 of the seat 7 and is designed to track forward/rearward states 16 of the seating 9 (seat 7) and/or to track upward/downward states 17 of the seating 9 (seat). At least one back rest sensor 13 is assigned to the back rest 8 of the seat 7. It is evident for a skilled person that each seat 7 of the vehicle 1 has at least one back rest sensor 13. The least one back rest sensor 13 determines forward/rearward states 18 of the back rest 8 of the seat 7.

Additionally, at least weight sensor 14 is assigned to the seating 9 of the seat 7. The at least one weight sensor 14 is designed to determine the weight of the occupant 3 in the respective seat 7.

**Figures 3A** to **3C** show different schematic views, representing the correlation between a distance 32C of a chest 30 of the occupant 3 from the steering wheel 5 or the dashboard 6 and the seat track determined by the seat track sensor 12 (see Fig. 2) and/or the back rest sensor 13 (see Fig. 2). The distance 32C of the chest 30 provides a high added value in case of braking situations of the vehicle 1 (see Fig. 2) where the occupant 3 leans forward whereas the seat track sensors 12 and/or the back rest sensors 13 won't detect it. The distance 32C of the chest 30 and/or the position of the occupant's 3 head 31, sitting in the seat 7, are determined with the alt least one 3D sensor system 21 (see Fig. 2).

Embodiments of the crash algorithms 50, as disclosed in **Figures 4, 5** and **7** compute signals from the direct sensing system of the size of the occupant 3, chest 30 and head 31 distance 32 of the occupant 3 from dashboard 6 or steering wheel 5 to adapt the deployment strategy in function of the actual occupant classification. Reference is and to Fig. 2 an Fig.3 which describe the technical features (associated reference numerals), which are required to determine the size of the occupant 3, distance 32C of the chest 30 and distance 32H of the head 31, weight or position of the occupant 3 in the seat. The actual fused occupant classification 60 is the combination of the size of the occupant 3, distance 32C of the chest 30 and distance 32H of the head 31 of the occupant 3 from dashboard 6 or steering wheel 5.

**Figure 4** is a schematic view of an embodiment of the method, carried out by a crash algorithm 50, which uses the size of the occupant 3. The size of the occupant 3 defines the energy to be dissipated during a crash. It has then an impact on the type of restraint protections to deploy and their deployment logic. According to the state of the art, car makers define different deployment strategies in function of the size of the occupant. Generally, only two deployment strategies are optimized for $5^{th}$ female and $50^{th}$ male. The actual size of the occupant is not measured. In order to allow a better adjustment of the airbags (not shown), seat belts (not shown) and the like with the deployment strategy in a vehicle, the size of the occupant 3 is measured. According to the invention, the vehicle 1 has in the interior an occupant sensor 11, which provides accurate measurement of the size occupant 2. As described in Fig. 2, the 3D sensor system 21 can be for example time-of-flight sensors that measure depth by estimating the time delay from light emission to light detection, projected-light sensors which combine the projection of a light pattern with a standard 2D camera and depth is measured measure via triangulation, an interior time of flight camera, a 3D-camera system or on an interior radar system or any combination of the latter. From the collected data the 3D sensor system 21 calculates or estimates the size of the occupant 3. The calculated or estimated actual size of the occupant 3 allows a better adjustment of the restraint deployment strategy and will also allow to optimize deployment strategies for more occupant sizes such as $95^{th}$ occupants for example.

The at least one seat track sensor 12 of the seat sensor system 20 provides data about the forward/rearward states 16 of the seating 9 and/or to track upward/downward states 17 of the seating 9 of the seat 7. The at least one back rest sensor 13 of the seat sensor system 20 provides data about data about forward/rearward states 18 of the back rest 8 of the seat 7. The at least one weight sensor 14 of the seat sensor system 20 provides data about the weight of the occupant 3 in the respective seat 7. The application of the at least one seat track sensor 12, the at least one back rest sensor 13 and the at least one weight sensor 14 of the seat sensor system 20 are known form the prior art.

The data of the measured occupant size and the data form the traditional sensors, for example the at least one seat track sensor 12, the at least one back rest sensor 13 and the at least one weight sensor 14 are transferred to a fusion module 51. The fusion of the data in the fusion module 51 mitigate misclassifications of the of the seat sensor system 20 (for example the at least one seat track sensor 12, the at least one back rest sensor 13 and the at least one weight sensor 14) and also a misclassification of the 3D sensor system 21.

As shown in Fig. 1, the at least one central impact sensor 4C and the at least one remote impact sensor 4R sense an impact and the location of the impact. The data from the at least one central impact sensor 4C and the at least one remote impact sensor 4R are sent to an event detection module 52 where a decision is made if a deployment or no deployment should be carried out.

A fused occupant classification 60 from the fusion module 51 is transferred to the occupant displacement prediction module 53 and the deployment requests module 54. The event detection module 52 is connected to the occupant displacement prediction module 53. From the fusion module 51 the calculated or estimated size of the occupant 3 is delivered as well to the occupant displacement prediction module 53.

The fused occupant classification 60 which encompasses as well the calculated or estimated actual size of the occupant 3, is used by the occupant displacement prediction module 53 to calculate a result 62 which is transferred to the deployment requests module 54. Once an event (collision) is detected in the event detection module 52, the occupant displacement prediction module 53 can adapt required restraint deployment requests of the available safety devices (for example airbags, adaptive airbags, seat belts, seat belt pretension or the like). The calculated or estimated actual size of the occupant 3, influences via the fused occupant classification 60 the result 62 calculated in the displacement prediction module 53, which is the deployment of airbags, adaptive airbags, seat belts or the like in the vehicle 1.

As mentioned above, the fused occupant classification 60 from the fusion in the fusion module 51 encompasses as well the calculated or estimated actual size of the occupant 3. The fused occupant classification 60 influences as well the calculation in the deployment requests module 54. Depending as well form the results 62, calculated in the displacement prediction module 53, the deployment requests module 54 calculates an adjustment of the restraint system strategy. The adaptive restraints, such as airbag vents or belt load limiter are requested differently in function of the size of the occupant 3. With the result form the fusion module 51 the adaptive restraint system strategy, determined in the deployment requests module 54, is a function of the actual classification of the occupant 3.

The calculated or estimated actual size of the occupant 3, determined by the at least one 3D sensor system 21, is fused with the results from traditional sensors (for example seat track sensor 12, back rest sensor 13 and weight sensor 14) of the seat sensor system 20 to mitigate misclassifications of the seat track sensor 12, back rest sensor 13 and weight sensor 14 and also misclassification of the at least one 3D sensor system 21.

**Figure 5** is a schematic view of an embodiment of the method, carried out by a crash algorithm 50, which uses the size of the occupant 3 and the distance 32C of the chest 30 of the occupant 3 from the dashboard 6 or steering wheel 5. In addition to the embodiment of the crash algorithm 50, described by Fig. 4, in the fusion module 51 the distance 32C of the occupant's 3 chest 30 to the dashboard 6 or the steering wheel 5 is used. The actual distance 32C of the occupant's 3 chest 30 to the dashboard 6 or the steering wheel 5 is determined by the at least one 3D sensor system 21. Since the fusion with the results from traditional sensors (for example seat track sensor 12, back rest sensor 13 and weight sensor 14) has already been described in relation to Fig. 4 and is not again described here in order to avoid unnecessary iterations, reference is made to Fig. 4.

The embodiment of the crash algorithm 50 described in Fig. 5 uses in addition to the determined or measured actual size occupant 3 the determined or measured actual distance 32C of the chest 30 of the occupant 3 to the dashboard 6 or the steering wheel 5. The measured actual distance 32C of the chest 30 of the occupant 3 to the dashboard 6 or the steering wheel 5 provides of information of the distance available between the occupant 3 and the airbags (not shown) to dissipate the energy of the crash. The more accurate measurement of the available distance 32C will then allow a better management of airbag deployment and seat belts deployment strategies carried out by the deployment requests module 54, which receives the respective data or information from the fusion module 51. The usage accurate measurement of the available distance 32C and the derived signal form the fusion module 51 will also improve the results determined by the occupant displacement prediction module 53. The improvement is achieved due to the determination or the measure of the initial position of the occupant 3 on the respective seat 7.

**Figure 6** is a schematic view of the operation carried out by the fusion module 50. The fusion module uses information or data for the at least one occupant sensor 11 and the traditional seat sensor system 20 (seat track sensor 12, back rest sensor 13 and weight sensor 14). The seat track sensor 12 as mentioned in the description with respect to Fig. 2 provides information at least of the forward/rearward states 16 of the seating 9. The seat track sensor 12 can provide as well upward/downward states 17 of the seating 9. The back rest sensor 13 provides information about the position of the back rest 8 of the seat 7. The least one 3D sensor system 21 is used as well to determine or measure the distance 32C of the chest 30 of the occupant 3 from dashboard 6 or steering wheel 5. The position information of the seating 9, the position information of the backrest 8 and the distance 32C of the chest 30 of the occupant 3 from the dashboard 6 or steering wheel 5 are provided to the prefusion module 55, which determines a fused occupant distance. The fused occupant distance adds more granularities to the position of the occupant 3 in the seat 7.

The size of the occupant 3, determined or measured by the at least one 3D sensor system 21, and the weight of the occupant 3, measured by the weight sensor 14, are provided to a further prefusion module 56, which determines a fused occupant size. As shown in Fig. 6, the fusion module 51 is defined by the prefusion module 55, the further prefusion module 56 and a final fusion module 57.

An output of the prefusion module 55 and an output of the further prefusion module 56 are sent to the final fusion module 57 which provides a fused occupant classification 60, which is updated regularly. With the described fusion a combination of the distance 32C of the chest 30, determined by the 3D sensor system 21, with the results from the traditional sensors such as seat track sensor 12, weight sensor 14 and the bask rest sensor 13 a merged position of the occupant 3 is computed with more position states than the ones provided by the traditional sensors only. With reference to Fig. 3 the measured, actual distance 32C of the chest 30 of the occupant provides a high added value in case of braking situations (see for example Fig. 3B). In a braking situation the occupant 3 leans forward, whereas the seat track sensor 12 and/or the back rest sensor 13 won't detect it. The actual measured distance 32C of the chest 30 provides a high added value when the occupant 3 (for example driver) is in a relax position when the vehicle 1 is in autonomous mode.

**Figure 7** is a schematic view of a further embodiment of the inventive method, carried out by a crash algorithm 50, which uses the distance 32H of the head 31 of the occupant 3 from the steering wheel 5 or the dashboard 6.

The actual distance 32H of the head 31 of the occupant 3, determined or measured by the at least one 3D sensor system 21, is used in the occupant displacement prediction module 53. The occupant displacement prediction module 53 is used to optimize the requested restraint protections according to the motion of the occupant 3 to ensure a better coupling between the airbag and the occupant 3. The measured actual distance 32H of the head 31 of the occupant 3 from the steering wheel 5 or the dashboard 6 determines the timing and efficiency of an airbag protection which highly depends on its deployment time and its interaction with the head 31 of the occupant 3.

As already described in Fig. 5 the actual size of the occupant 3 and the actual distance 32C of the chest 30 of the occupant 3 from the dashboard 6 or steering wheel 5 are determined or measured by the at least one 3D sensor system 21. The increasing number of data or information of the actual position of the occupant 3 and its usage in the displacement prediction module 53 and the deployment requests module 54 enable a tailed deployment of the restrains according to a detection of a crash in the event detection module 52.

According to the prior art, an estimation of the displacement of the occupant 3 is calculated by inclusion of the deceleration of the vehicle 1. This criterion gives an estimation of the motion of the occupant 3 by assessing the displacement of its center of mass, assuming the occupant is not belted nor restrained by friction forces due to its interaction with the seat 7. The mechanical model used in the crash algorithm 50 is a free mass model.

The actual displacement is given by the double integration of the center tunnel acceleration signal. The prediction of the displacement of the occupant 3 within the next milliseconds is calculated by a Taylor series expansion. It is a 2$^{nd}$ order expansion and so it requires the use of displacement 1$^{st}$ derivative, which is velocity, and displacement 2$^{nd}$ derivative, which is acceleration (see equation 1).

$$\text{Occupant Displacement}(t+\Delta t) = \text{Displacement}(t) + \Delta t \times \text{Velocity}(t) + (\Delta t^2)/2 \times \text{Acceleration}(t)$$

The addition of the distance of the head 31 of the occupant 3 allows to adapt the occupant displacement based on an actual position information of the head 31.

An occupant classification is based on biomechanical characteristics of occupant 3 used to optimize restraint system in vehicle safety industry. The occupant classification is qualified as indirect, if it is computed for example from the position of the seat 7. The occupant classification is qualified as direct, if it is computed for example from the real detected and computed height of the occupant 3.

In the embodiments described in Fig. 4, Fig. 5 and Fig. 7 a signal processing module 58. The signal processing module 58 processes and combines, depending on the installed embodiment, occupant signals from the 3D sensor system 21 to compute direct occupant classification, like distance 32C of the chest 30 and/or distance 32H for the head 31. Furthermore, the signal processing module 58 processes as well signals generated by the seat track sensor 12, the back rest sensor 13 and weight sensor 14 combined with the seat 7 of the vehicle 1. The signal processing module 58 processes and combines seat signals from the seat sensor system 20 to compute the indirect occupant classification and state of the position of the seat 7. Finally, the fusion module 51 merges occupant classification and position information from the at least one signal processing module 58 and creates the fused occupant classification 60, which is used in the embodiments of the crash algorithm of Fig. 4, Fig. 5 of Fig. 7.

**Figure 8** is a schematic representation of 3D body points, which are used for example to enable computation of the size of the occupant 3. Various body metrics of the occupant 3 include at least the size occupant or the occupant class based on at least its height/size. Body metrics of the occupant 3 can include optionally the occupant weight and the occupant class based on its measured height and measured weight. The 3D sensor system 21 (see Fig. 2) can determine a set of 3D point locations 34 on a surface 35 of the body of the occupant 3. The 3D sensor system 21 allows at least the computation of a 3D head point 37 within the area 31A of the head 31 and a 3D chest point 38 within the area 30A of the chest 30.

**Figure** 9 is a schematic representation of a mass model for the displacement of the occupant 3. Three kinds of usage of the distance, determined by the at least one 3D sensor system 21, of the head 31 of the occupant 3 can be done depending on the quality of the signal generated by the 3D sensor system 21 (for example 3D head point, 37 and 3D chest point 38).

The distance 32H of the head 31 can used to provide an initial position, velocity, or acceleration of the head 31 before the crash. The distance 32H of the head 31 is used as a dedicated criterion to adapt restraint protections in the occupant displacement prediction module 53 of the crash algorithm 50.

The displacement of the occupant 3 is here modelized thru a spring mass model (see Fig. 9). This model has the advantage of taking the frictions between the occupant 3 and the seat belt (not shown) into account.

The actual distance 32H of the head 31 is used by the crash algorithm 50 in the event of a crash if the at least one 3D sensor system 21 is able to provide enough accuracy of the displacement of the head 31 during the crash process.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

## LIST OF REFERENCE NUMERALS

| | |
|---|---|
| 1 | vehicle |
| $2_1, 2_2, ...2_N$ | protection devices |
| 3 | Occupant |
| 4C | Central impact sensor |
| 4R | Remote impact sensor |
| 5 | Steering wheel |
| 6 | Dashboard |
| 7 | Seat |
| 8 | Back rest |
| 9 | Seating |
| 10 | Electronic control unit (ECU) |
| 12 | Seat track sensor |
| 13 | Back rest sensor |
| 14 | Weight sensor |
| 16 | Forward/rearward state |
| 17 | Upward/downward state |
| 18 | Forward/rearward state |
| 20 | Seat sensor system |

| | |
|---|---|
| 21 | 3D sensor system |
| 30 | Chest |
| 31 | Head |
| 32C | Distance of chest |
| 32H | Distance of head |
| 34 | 3D point location |
| 35 | Surface |
| 37 | 3D head point |
| 38 | 3D chest point |
| 50 | Crash algorithm |
| 51 | Fusion module |
| 52 | Event detection module |
| 53 | Occupant displacement prediction module |
| 54 | Deployment requests module |
| 55 | Prefusion module |
| 56 | Further prefusion module |
| 57 | Final fusion module |
| 58 | Signal acquisition and processing module |
| 60 | Fused occupant classification |
| 62 | Result |
| L | Center line |

**Claims**

1. A method for restraint deployment adaption in a vehicle (1), the method comprising:

determining position data of a back rest (8) of at least one seat (7) with a back rest sensor (13) and position data of the seating (9) of at least one seat (7) with seat track sensor (12);
measuring the size of an occupant (3) and position of the occupant (3) in the seat (7) with at least one 3D sensor system (21);
measuring the weight of the occupant (3) in the respective seat (7) with weight sensor (14) of a seat sensor system (20);
measuring the distance (32C) of the chest (30) of the occupant (3) from dashboard (6) or steering wheel (5) with the at least one 3D sensor system (21);
carrying out fusion in a prefusion module (55) of the position data of the of the backrest (8), the position data of the seating (9) and the measured distance (32C) of the chest (30); carrying out fusion in a further prefusion module (56) of the size of an occupant (3) and the weight of the occupant (3);
carrying out fusion in a final fusion module (57) of an output of the prefusion module (55) and an output of the further prefusion module (56) and thereby generating a fused occupant classification (60);
transferring the fused occupant classification (60) to an occupant displacement prediction module (53) and to deployment requests module (54);
detecting an event by an event detection module (52);
calculating, triggered by the event and usage of the fused occupant classification (60), in the displacement prediction module (53) an adaption with regard to deployment times of safety devises; and
calculating, using the fused occupant classification (60) and the result (62) from displacement prediction module (53) in the deployment requests module (54) an adjustment of the restraint system strategy in function of the actual classification of the occupant (3).

2. The method according to claim 1, wherein the distance (32C) of the chest (30) of the occupant (3) from the steering wheel (5) or the dashboard (6) of the vehicle (1) is determined by a computed 3D chest point (38) within the area (30A) of the chest (30).

3. The method according to any of the preceding claims, wherein a distance (32H) of a head (31) of the occupant (3) from the steering wheel (5) or the dashboard (6) of the vehicle (1), the distance (32H) of the head (31) is measured by the at least one 3D sensor system (21) and the measured distance (32H) is transferred to occupant displacement prediction module (53) for calculating in the displacement prediction module (53) with the use of the fused occupant classification (60) an adaption with regard to deployment times of safety devises.

**4.** The method according to claim 3, wherein the distance (32H) of the head (31) of the occupant (3) from the steering wheel (5) or the dashboard (6) of the vehicle (1) is determined by a computed 3D head point (37) within the area (31A) of the head (31).

**5.** The method according to any of the preceding claims, wherein the at least one 3D sensor system (21) includes at least one 3D imaging sensor.

**6.** A non-transitory computer-readable storage medium storing computer program instructions thereon which, when executed by an electronic control unit (10) of the system for a restraint deployment strategy of claim 7 results in performing a computer-implemented method according to claim 1.

**7.** A system for a restraint deployment strategy comprising:

an electronic control unit (10) in a vehicle (1) with;
a signal processing module (58) processes signals from at least one 3D sensor system (21) to determine size, distance (32C) of the chest (30) and distance (32H) of the head (31) of the occupant (3), at least one seat track sensor (12), at least one back rest sensor (13) and at least one weight sensor (14), combined with a seat (7) of the vehicle (1), at least one impact sensor (4C);
a fusion module (51) which is defined by a prefusion module (55), a further prefusion module (56) and a final fusion module (57), wherein

the prefusion module (55) carries out fusion of position data of a backrest (8), of position data of the seating (9) and the measured distance (32C) of the chest (30),
the further prefusion module (56) carries out fusion of the size of an occupant (3) and the weight of the occupant (3), and
the final fusion module (57) carries out fusion an output of the prefusion module (55) and an output of the further prefusion module (56);

an event detection module (52) connected with at least one connected impact sensor (4C) of the signal processing module (58);
an occupant displacement prediction module (53) receives a fused occupant classification (60) from the fusion module (51), is connected to the event detection module (52) and receives the actual distance (32H) of the head (31) of the occupant (3); and

a deployment requests module (54) receives a fused occupant classification (60) from the fusion module (51) and a calculated result (62) from the occupant displacement prediction module (53).

**8.** The system according to claim 7, wherein the at least one 3D sensor system (21) of the signal processing module (58) is capable of measuring an actual distance (32C) of the chest (30) of the occupant (3) to a dashboard (6) or a steering wheel (5) of the vehicle (1).

**9.** The system according to claim 7, wherein the at least one 3D sensor system (21) of the signal processing module (58) is capable of measuring an actual distance (32H) of the head (31) of the occupant (3) is connected to the occupant displacement prediction module (53).

**10.** The system according to claim 7, wherein a fused occupant classification (60) of the fusion module (51) is connected to the displacement prediction module (53), capable of carrying out, based on the fused occupant classification (60), an adaption of deployment times of safety devises and the deployment requests module (54) capable of carrying out, based on the fused occupant classification (60) and the result (62) from displacement prediction module (53), an adjustment of the restraint system strategy in function of the actual classification of the occupant (3).

**11.** The system according to claim 10, wherein the safety devices are airbags, adaptive airbags, seat belts, seat belt pretension or the like.

**12.** The system according to claim 7, wherein the 3D sensor system (21) includes at least one 3D sensor or is configured as an interior time of flight camera, a 3D-camera system or an interior radar system or any combination of the latter.

**Patentansprüche**

1. Ein Verfahren zur Rückhalteeinsatzanpassung in einem Fahrzeug (1), das Verfahren umfassend:

   Ermitteln von Positionsdaten einer Rückenlehne (8) mindestens eines Sitzes (7) mittels eines Rückenlehnensensors (13) und von Positionsdaten der Sitzfläche (9) mindestens eines Sitzes (7) mittels eines Sitzspurensensors (12);
   Messen der Größe eines Insassen (3) und der Position des Insassen (3) im Sitz (7) mittels mindestens eines 3D-Sensorsystems (21);
   Messen des Gewichts des Insassen (3) in dem jeweiligen Sitz (7) mit einem Gewichtssensor (14) eines Sitzsensorsystems (20);
   Messen des Abstandes (32C) des Brustkorbes (30) des Insassen (3) von einem Armaturenbrett (6) oder Lenkrad (5) mit dem mindestens einen 3D-Sensorsystem (21);
   Durchführen einer Fusion in einem Präfusionsmodul (55) der Positionsdaten der Rückenlehne (8), der Positionsdaten der Sitzfläche (9) und des gemessenen Abstands (32C) des Brustkorbs (30); Durchführen einer Fusion in einem weiteren Präfusionsmodul (56) der Größe eines Insassen (3) und des Gewichts des Insassen (3);
   Durchführen einer Fusion in einem finalen Fusionsmodul (57) einer Ausgabe des Präfusionsmoduls (55) und einer Ausgabe des weiteren Präfusionsmoduls (56) und dadurch Erzeugen einer fusionierten Insassenklassifizierung (60);
   Übertragen der fusionierten Insassenklassifizierung (60) an ein Insassenverlagerungsvorhersagemodul (53) und an ein Einsatzanforderungsmodul (54);
   Detektieren eines Ereignisses mittels eines Ereigniserkennungsmoduls (52);
   Berechnen, ausgelöst durch das Ereignis und die Verwendung der fusionierten Insassenklassifizierung (60), in dem Insassenverlagerungsvorhersagemodul (53) einer Anpassung in Bezug auf Einsatzzeiten von Sicherheitseinrichtungen; und
   Berechnen einer Anpassung der Rückhaltesystemstrategie in Abhängigkeit von der tatsächlichen Klassifizierung des Insassen (3) unter Verwendung der fusionierten Insassenklassifizierung (60) und des Ergebnisses (62) aus dem Verlagerungsvorhersagemodul (53) im Einsatzanforderungsmodul (54).

2. Das Verfahren nach Anspruch 1, wobei der Abstand (32C) des Brustkorbs (30) des Insassen (3) vom Lenkrad (5) oder dem Armaturenbrett (6) des Fahrzeugs (1) durch einen berechneten 3D-Brustpunkt (38) innerhalb des Bereichs (30A) des Brustkorbs (30) bestimmt wird.

3. Das Verfahren nach einem der vorhergehenden Ansprüche, wobei ein Abstand (32H) eines Kopfes (31) des Insassen (3) vom Lenkrad (5) oder Armaturenbrett (6) des Fahrzeugs (1) bestimmt wird, der Abstand (32H) des Kopfes (31) von dem mindestens einen 3D-Sensorsystem (21) gemessen und der gemessene Abstand (32H) an das Insassenverlagerungsvorhersagemodul (53) übertragen wird, um in dem Verlagerungsvorhersagemodul (53) unter Verwendung der fusionierten Insassenklassifizierung (60) eine Adaption hinsichtlich von Einsatzzeiten von Sicherheitseinrichtungen zu berechnen.

4. Das Verfahren nach Anspruch 3, wobei der Abstand (32H) des Kopfes (31) des Insassen (3) zum Lenkrad (5) oder zum Armaturenbrett (6) des Fahrzeugs (1) durch einen berechneten 3D-Kopfpunkt (37) innerhalb des Bereichs (31A) des Kopfes (31) bestimmt wird.

5. Das Verfahren nach einem der vorhergehenden Ansprüche, wobei das mindestens eine 3D-Sensorsystem (21) mindestens einen 3D-Bildsensor umfasst.

6. Ein nicht-transitorisches, computerlesbares Speichermedium, auf dem Computerprogrammanweisungen gespeichert sind, die bei Ausführung durch eine elektronische Steuereinheit (10) des Systems für eine Rückhalteeinsatzstrategie nach Anspruch 7 zur Durchführung eines computerimplementierten Verfahrens nach Anspruch 1 führen.

7. Ein System für eine Rückhalteeinsatzstrategie, umfassend:
   eine elektronische Steuereinheit (10) in einem Fahrzeug (1) mit:

   einem Signalverarbeitungsmodul (58), das Signale von mindestens einem 3D-Sensorsystem (21) verarbeitet, um die Größe, den Abstand (32C) des Brustkorbs (30) und den Abstand (32H) des Kopfes (31) des Insassen (3) zu bestimmen, sowie Signale mindestens eines Sitzspursensors (12), mindestens eines Rückenlehnensensors (13) und mindestens eines Gewichtssensors (14) verarbeitet, kombiniert mit einem Sitz (7) des Fahrzeugs (1) und mindestens einem Aufprallsensor (4C);
einem Fusionsmodul (51), das durch ein Präfusionsmodul (55), ein weiteres Präfusionsmodul (56) und ein Endfusionsmodul (57) definiert ist, wobei
das Präfusionsmodul (55) eine Fusion von Positionsdaten einer Rückenlehne (8), von Positionsdaten der Sitzfläche (9) und des gemessenen Abstands (32C) des Brustkorbs (30) durchführt,
das weitere Präfusionsmodul (56) eine Fusion der Größe eines Insassen (3) und des Gewichts des Insassen (3) durchführt, und
das finale Fusionsmodul (57) eine Fusion einer Ausgabe des Präfusionsmoduls (55) und einer Ausgabe des weiteren Präfusionsmoduls (56) durchführt;
einem Ereigniserkennungsmodul (52), das mit mindestens einem angeschlossenen Aufprallsensor (4C) des Signalverarbeitungsmoduls (58) verbunden ist;
einem Insassenverlagerungsvorhersagemodul (53), das eine fusionierte Insassenklassifizierung (60) von dem Fusionsmodul (51) empfängt, mit dem Ereigniserkennungsmodul (52) verbunden ist und den tatsächlichen Abstand (32H) des Kopfes (31) des Insassen (3) empfängt; und
einem Einsatzanforderungsmodul (54), das eine fusionierte Insassenklassifizierung (60) von dem Fusionsmodul (51) und ein berechnetes Ergebnis (62) von dem Insassenverlagerungsvorhersagemodul (53) empfängt.

**8.** Das System nach Anspruch 7, wobei das mindestens eine 3D-Sensorsystem (21) des Signalverarbeitungsmoduls (58) in der Lage ist, einen tatsächlichen Abstand (32C) des Brustkorbes (30) des Insassen (3) zu einem Armaturenbrett (6) oder einem Lenkrad (5) des Fahrzeugs (1) zu messen.

**9.** Das System nach Anspruch 7, wobei das mindestens eine 3D-Sensorsystem (21) des Signalverarbeitungsmoduls (58) in der Lage ist, einen tatsächlichen Abstand (32H) des Kopfes (31) des Insassen (3) zu messen und mit dem Insassenverlagerungsvorhersagemodul (53) verbunden ist.

**10.** Das System nach Anspruch 7, wobei

eine fusionierte Insassenklassifizierung (60) des Fusionsmoduls (51) mit dem Verlagerungsvorhersagemodul (53) verbunden ist, das in der Lage ist, auf der Grundlage der fusionierten Insassenklassifizierung (60), eine Anpassung der Einsatzzeiten der Sicherheitseinrichtungen durchzuführen, und
die fusionierte Insassenklassifizierung (60) des Fusionsmoduls (51) mit dem Einsatzanforderungsmodul (54) verbunden ist, das in der Lage ist, auf der Grundlage der fusionierten Insassenklassifizierung (60) und des Ergebnisses (62) des Insassenverlagerungsvorhersagemoduls (53), eine Anpassung der Rückhaltesystemstrategie in Abhängigkeit von der tatsächlichen Klassifizierung des Insassen (3) durchzuführen.

**11.** Das System nach Anspruch 10, wobei die Sicherheitseinrichtungen Airbags, adaptive Airbags, Sicherheitsgurte, Gurtstraffer oder dergleichen sind.

**12.** Das System nach Anspruch 7, wobei das 3D-Sensorsystem (21) mindestens einen 3D-Sensor umfasst oder als eine Innenraum-Flugzeitkamera, ein 3D-Kamerasystem oder ein Innenraum-Radarsystem oder eine beliebige Kombination der letzteren ausgebildet ist.

## Revendications

**1.** Procédé d'adaptation de déploiement de retenue dans un véhicule (1), le procédé comprenant :

déterminer des données de position d'un dossier (8) d'au moins un siège (7) à l'aide d'un capteur de dossier (13) et des données de position de l'assise (9) d'au moins un siège (7) à l'aide d'un capteur de rail de siège (12) ;
mesurer la taille d'un occupant (3) et la position de l'occupant (3) dans le siège (7) à l'aide d'au moins un système de capteurs 3D (21) ;
mesurer le poids de l'occupant (3) dans le siège respectif (7) à l'aide d'un capteur de poids (14) d'un système de capteurs de siège (20) ;
mesurer la distance (32C) entre la poitrine (30) de l'occupant (3) et le tableau de bord (6) ou le volant (5) à l'aide de l'au moins un système de capteurs 3D (21) ;
effectuer une fusion dans un module de préfusion (55) des données de position du dossier (8), des données de position de l'assise (9) et de la distance mesurée (32C) de la poitrine (30) ; effectuer une fusion dans un module de préfusion supplémentaire (56) de la taille d'un occupant (3) et du poids de l'occupant (3) ;

effectuer une fusion dans un module de fusion final (57) d'une sortie du module de préfusion (55) et d'une sortie du module de préfusion supplémentaire (56) et générer ainsi une classification fusionnée des occupants (60) ;
transférer la classification fusionnée des occupants (60) vers un module de prédiction du déplacement des occupants (53) et vers un module de demandes de déploiement (54) ;
détecter un événement à l'aide d'un module de détection d'événements (52) ;
calculer, déclenché par l'événement et l'utilisation de la classification fusionnée des occupants (60), dans le module de prédiction du déplacement (53), une adaptation concernant des temps de déploiement des dispositifs de sécurité ; et
calculer, à l'aide de la classification fusionnée des occupants (60) et le résultat (62) du module de prédiction du déplacement (53) dans le module de demandes de déploiement (54), un ajustement de la stratégie du système de retenue en fonction de la classification réelle de l'occupant (3).

**2.** Procédé selon la revendication 1, dans lequel la distance (32C) entre la poitrine (30) de l'occupant (3) et le volant (5) ou le tableau de bord (6) du véhicule (1) est déterminée par un point thoracique 3D calculé (38) dans la zone (30A) de la poitrine (30).

**3.** Procédé selon l'une quelconque des revendications précédentes, dans lequel une distance (32H) entre la tête (31) de l'occupant (3) et le volant (5) ou le tableau de bord (6) du véhicule (1) est déterminée, la distance (32H) de la tête (31) est mesurée par au moins un système de capteurs 3D (21) et la distance mesurée (32H) est transférée au module de prédiction du déplacement des occupants (53) pour calculer dans le module de prédiction du déplacement des occupants (53), à l'aide de la classification fusionnée des occupants (60), une adaptation concernant des temps de déploiement des dispositifs de sécurité.

**4.** Procédé selon la revendication 3, dans lequel la distance (32H) entre la tête (31) de l'occupant (3) et le volant (5) ou le tableau de bord (6) du véhicule (1) est déterminée par un point de tête 3D calculé (37) dans la zone (31A) de la tête (31).

**5.** Procédé selon l'une quelconque des revendications précédentes, dans lequel le au moins un système de capteurs 3D (21) comprend au moins un capteur d'imagerie 3D.

**6.** Support de stockage non transitoire lisible par ordinateur stockant des instructions de programme informatique qui, lorsqu'elles sont exécutées par une unité de commande électronique (10) du système pour une stratégie de déploiement de retenue selon la revendication 7, conduisent à la mise en œuvre d'un procédé mis en œuvre par ordinateur selon la revendication 1.

**7.** Système pour une stratégie de déploiement de retenue comprenant :
une unité de commande électronique (10) dans un véhicule (1) avec :

un module de traitement de signaux (58) qui traite des signaux provenant d'au moins un système de capteurs 3D (21) afin de déterminer la taille, la distance (32C) de la poitrine (30) et la distance (32H) de la tête (31) de l'occupant (3), et traite des signaux provenant d'au moins un capteur de rail de siège (12), d'au moins un capteur de dossier (13) et d'au moins un capteur de poids (14), combinés à un siège (7) du véhicule (1) et au moins un capteur d'impact (4C) ;
un module de fusion (51) qui est défini par un module de préfusion (55), un module de préfusion supplémentaire (56) et un module de fusion final (57), dans lequel
le module de préfusion (55) effectue une fusion des données de position d'un dossier (8), des données de position de l'assise (9) et de la distance mesurée (32C) de la poitrine (30),
le module de préfusion supplémentaire (56) effectue une fusion de la taille d'un occupant (3) et du poids de l'occupant (3), et
le module de fusion final (57) effectue une fusion d'une sortie du module de préfusion (55) et d'une sortie du module de préfusion supplémentaire (56) ;
un module de détection d'événements (52) qui est connecté à au moins un capteur d'impact connecté (4C) du module de traitement de signaux (58) ;
un module de prédiction du déplacement des occupants (53) qui reçoit une classification fusionnée des occupants (60) provenant du module de fusion (51), est connecté au module de détection d'événements (52) et reçoit la distance réelle (32H) de la tête (31) de l'occupant (3) ; et
un module de demandes de déploiement (54) qui reçoit une classification fusionnée des occupants (60) provenant du module de fusion (51) et un résultat calculé (62) provenant du module de prédiction du déplacement des occupants (53).

**8.** Système selon la revendication 7, dans lequel le au moins un système de capteurs 3D (21) du module de traitement de signaux (58) est capable de mesurer une distance réelle (32C) entre la poitrine (30) de l'occupant (3) et le tableau de bord (6) ou le volant (5) du véhicule (1).

**9.** Le système selon la revendication 7, dans lequel le au moins un système de capteurs 3D (21) du module de traitement de signaux (58) est capable de mesurer une distance réelle (32H) de la tête (31) de l'occupant (3) est connecté au module de prédiction du déplacement des occupants (53).

**10.** Système selon la revendication 7, dans lequel

une classification fusionnée des occupants (60) du module de fusion (51) est connectée au module de prédiction du déplacement des occupants (53) qui est capable d'effectuer, sur la base de la classification fusionnée des occupants (60), une adaptation des temps de déploiement des dispositifs de sécurité et
la classification fusionnée des occupants (60) du module de fusion (51) est connectée au module de demandes de déploiement (54) qui est capable d'effectuer, sur la base de la classification fusionnée des occupants (60) et du résultat (62) du module de prédiction du déplacement des occupants (53), un ajustement de la stratégie du système de retenue en fonction de la classification réelle de l'occupant (3).

**11.** Système selon la revendication 10, dans lequel les dispositifs de sécurité sont des airbags, des airbags adaptatifs, des ceintures de sécurité, des prétensionneurs de ceinture de sécurité ou similaires.

**12.** Système selon la revendication 7, dans lequel le système de capteurs 3D (21) comprend au moins un capteur 3D ou est configuré comme une caméra intérieure à temps de vol, un système de caméra 3D ou un système radar intérieur ou toute combinaison de ces derniers.

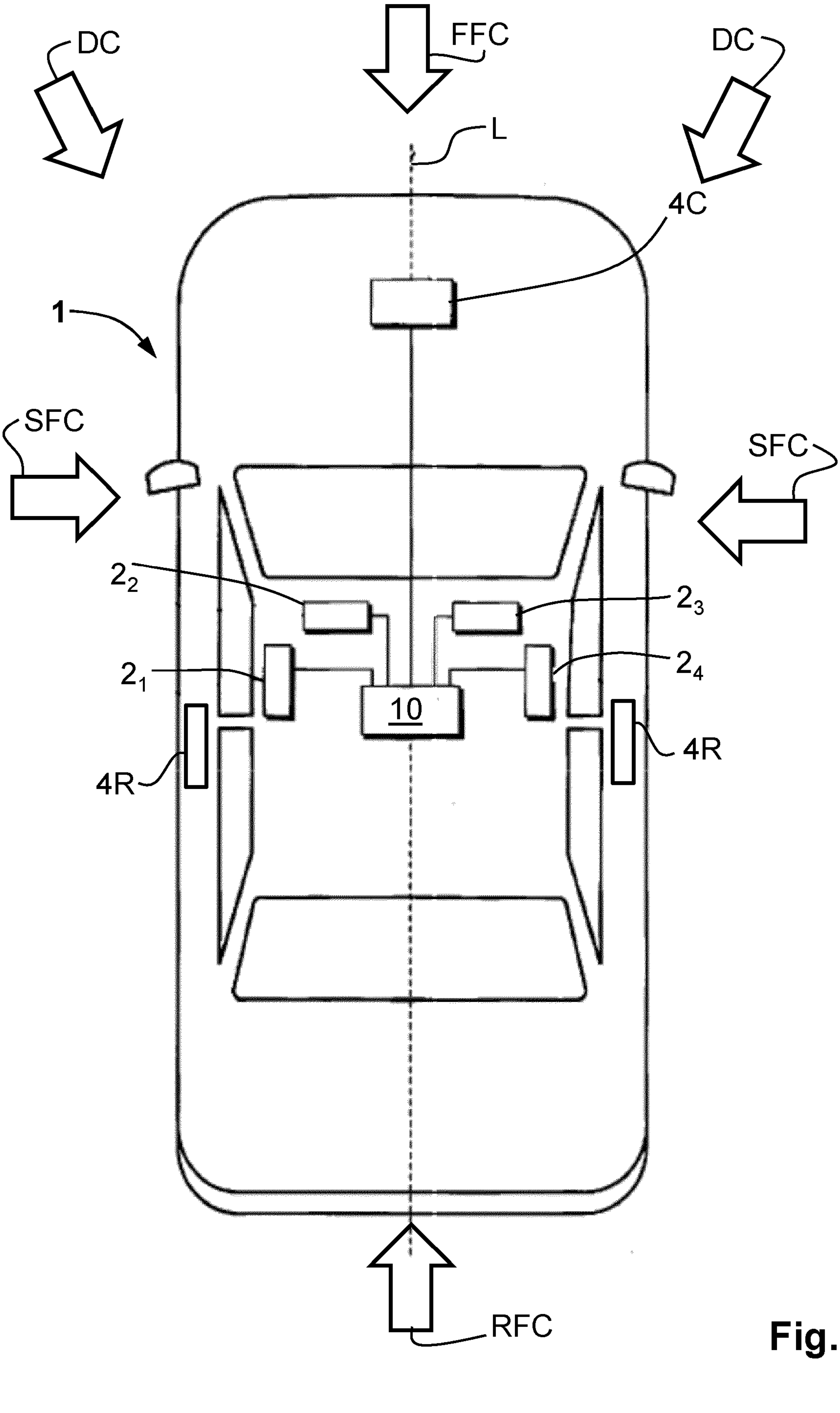


Fig. 1

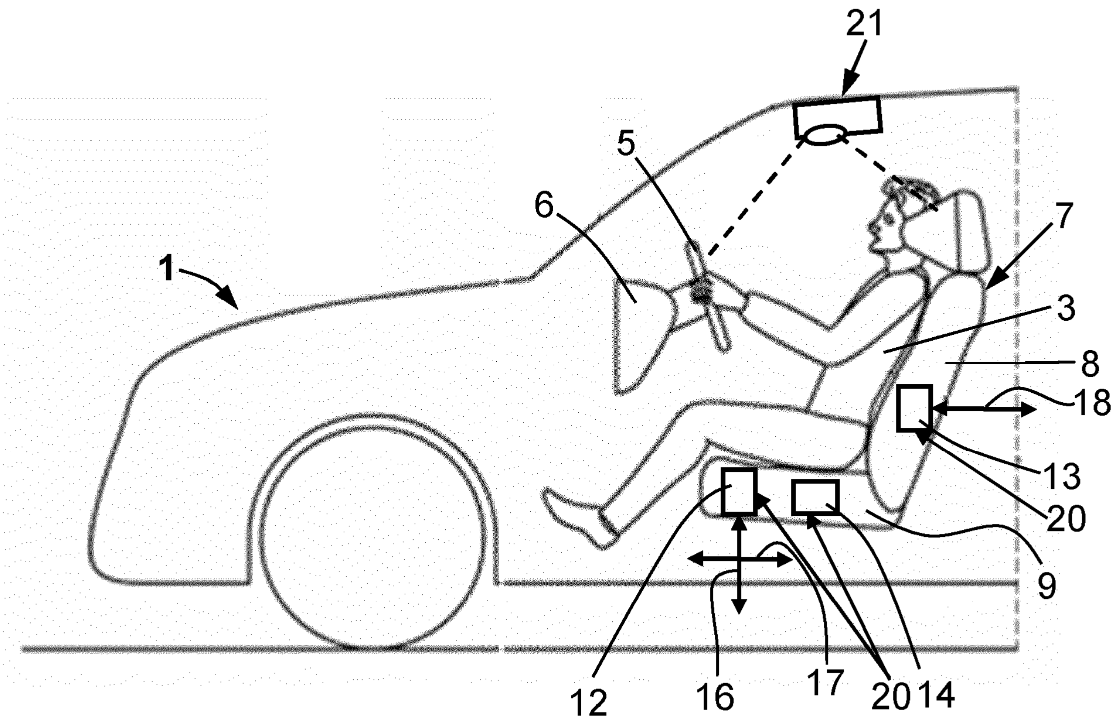


Fig. 2

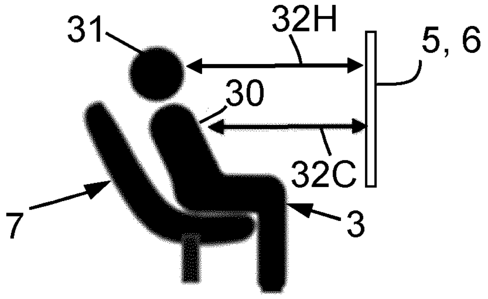


Fig. 3A

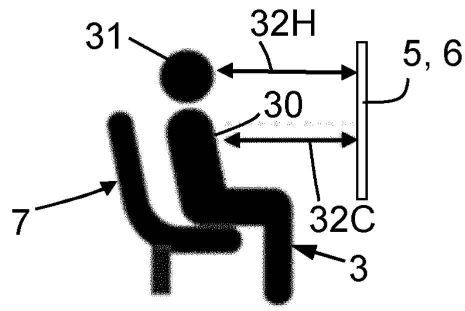


Fig. 3B

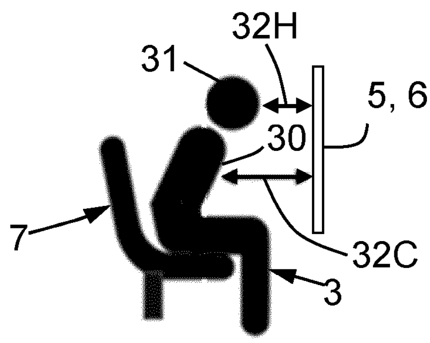


Fig. 3C

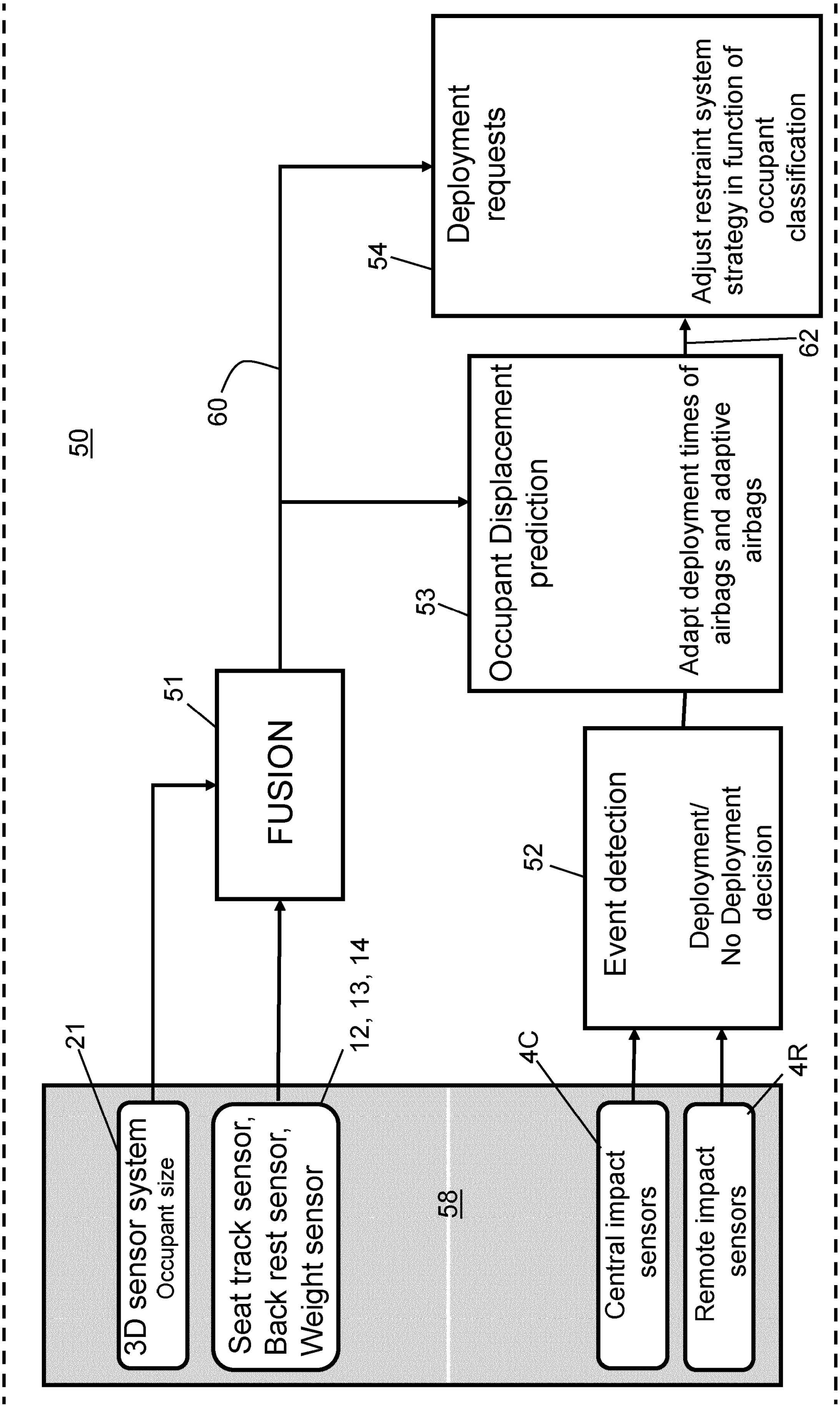
50
3D sensor system
Occupant size
21
Seat track sensor,
Back rest sensor,
Weight sensor
12, 13, 14
58
Central impact sensors
4C
Remote impact sensors
4R
FUSION
51
Event detection
Deployment/
No Deployment decision
52
Occupant Displacement prediction
Adapt deployment times of airbags and adaptive airbags
53
60
Deployment requests
Adjust restraint system strategy in function of occupant classification
54
62

Fig. 4

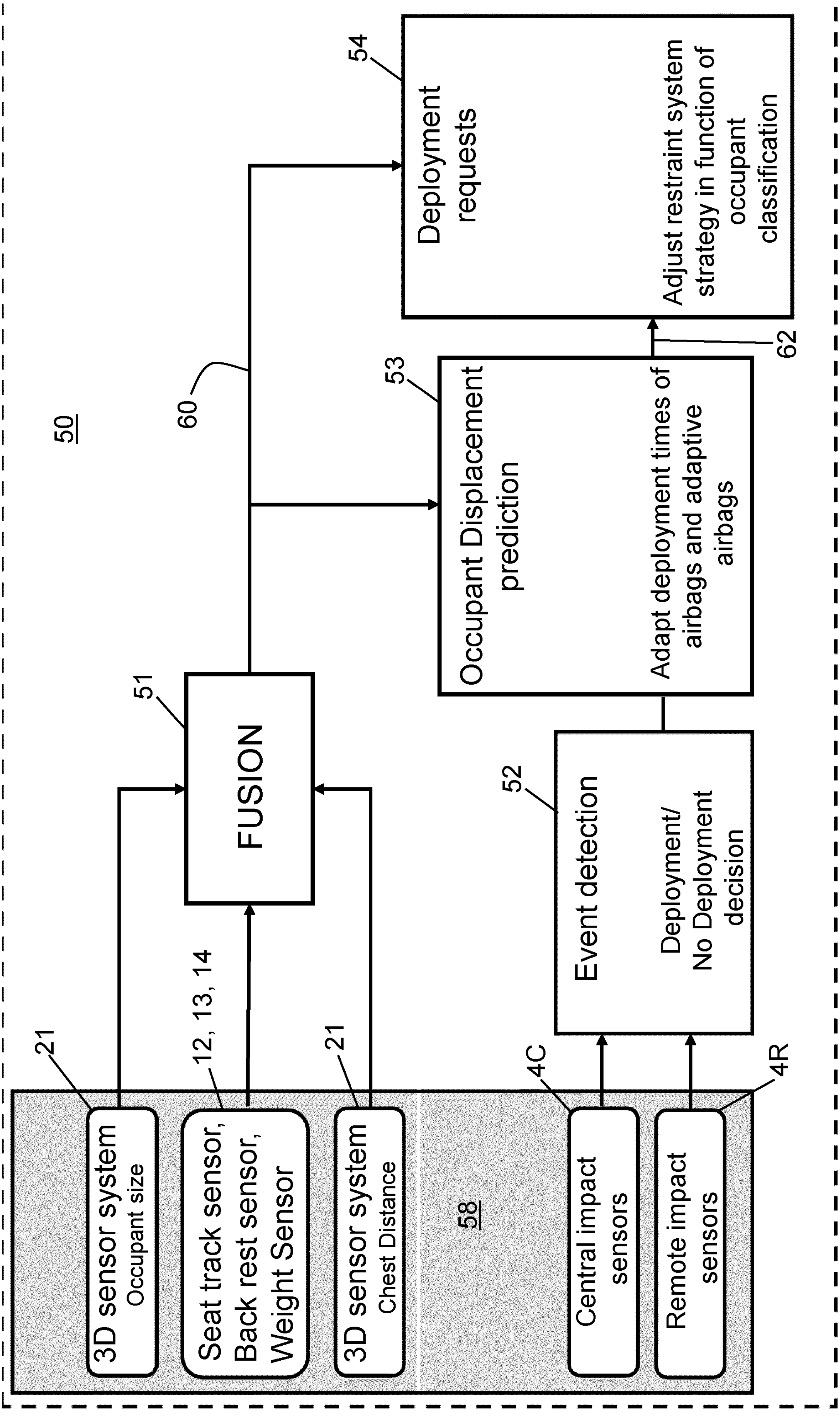
50
3D sensor system
Occupant size
Seat track sensor,
Back rest sensor,
Weight Sensor
3D sensor system
Chest Distance
58
Central impact
sensors
Remote impact
sensors
21
12, 13, 14
21
4C
4R
FUSION
51
Event detection
Deployment/
No Deployment
decision
52
Occupant Displacement
prediction
Adapt deployment times of
airbags and adaptive
airbags
53
60
Deployment
requests
Adjust restraint system
strategy in function of
occupant
classification
54
62

Fig. 5

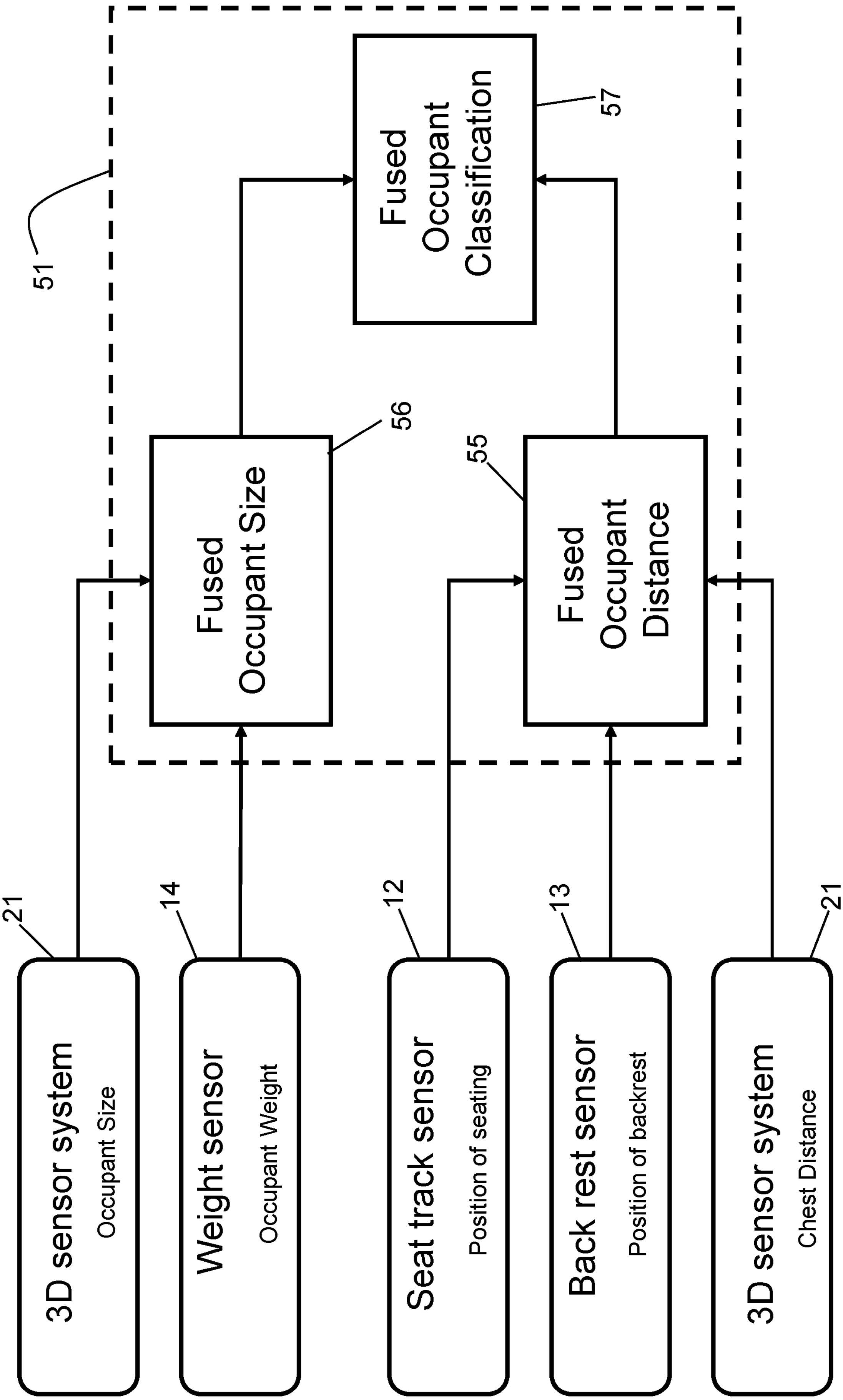
3D sensor system
Occupant Size
21
Weight sensor
Occupant Weight
14
Seat track sensor
Position of seating
12
Back rest sensor
Position of backrest
13
3D sensor system
Chest Distance
21
Fused Occupant Size
56
Fused Occupant Distance
55
Fused Occupant Classification
57
51

Fig. 6

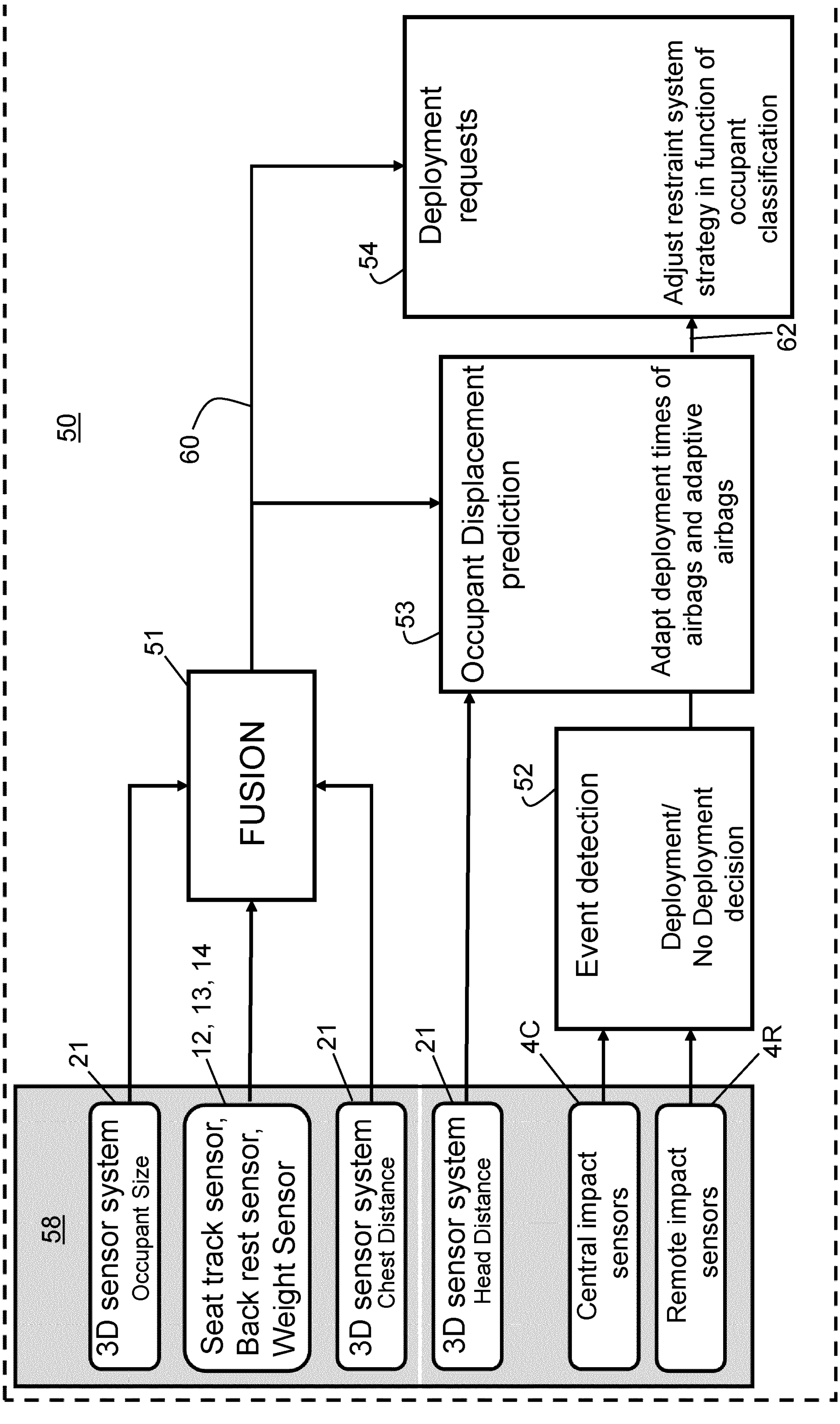
50
58
3D sensor system
Occupant Size
Seat track sensor,
Back rest sensor,
Weight Sensor
3D sensor system
Chest Distance
3D sensor system
Head Distance
Central impact
sensors
Remote impact
sensors
21
12, 13, 14
21
21
4C
4R
FUSION
51
Event detection
Deployment/
No Deployment
decision
52
Occupant Displacement
prediction
Adapt deployment times of
airbags and adaptive
airbags
53
60
Deployment
requests
Adjust restraint system
strategy in function of
occupant
classification
54
62

Fig. 7

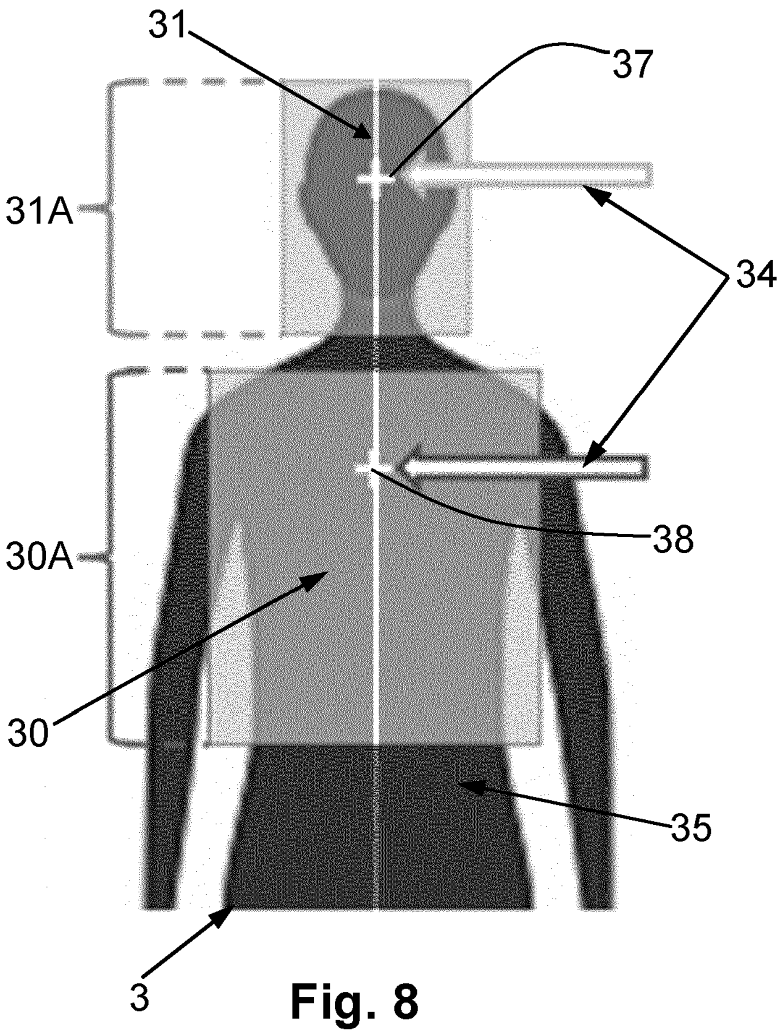


Fig. 8

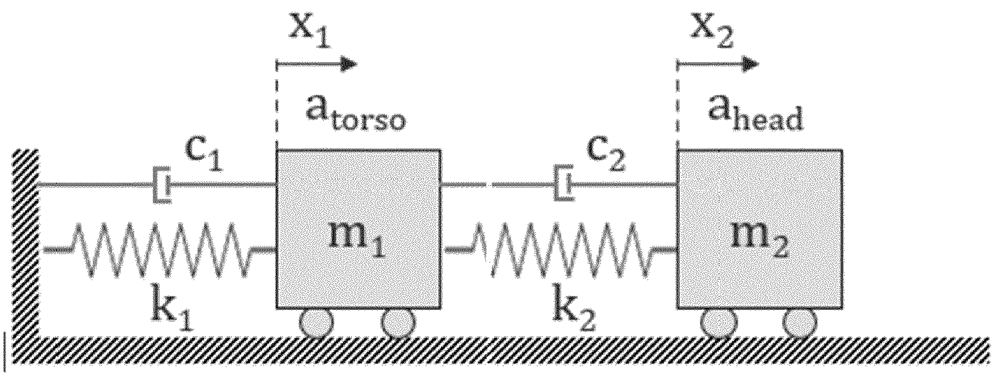


$$\ddot{x}_2 = a_{head}(t) - \frac{c_2}{m_2}.(\dot{x}_2 - \dot{x}_1) - \frac{k_2}{m_2}.(x_2 - x_1)$$

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040153229 A1
- US 20050017488 A1